# EUROPÄISCHE PATENTSCHRIFT

(11) **EP 1 119 688 B1**
(45) Veröffentlichungstag und Bekanntmachung des Hinweises auf die Patenterteilung: **18.06.2003**
(21) Anmeldenummer: 99959183.7
(22) Anmeldetag: 06.10.1999
(51) Int. Cl.: F01K 23/06, F02C 3/28

(54) **GAS- UND DAMPFTURBINENANLAGE**
GAS AND STEAM TURBINE INSTALLATION
INSTALLATION A TURBINE A GAZ ET A VAPEUR

(30) Priorität: 07.10.1998 DE 19846225
(43) Veröffentlichungstag der Anmeldung: 01.08.2001
(73) Patentinhaber: SIEMENS AKTIENGESELLSCHAFT, 80333 München (DE)
(72) Erfinder: HANNEMANN, Frank, D-91080 Spardorf (DE); SCHIFFERS, Ulrich, D-90542 Eckental (DE)
(86) Internationale Anmeldenummer: DE9903222
(87) Internationale Veröffentlichungsnummer: WO00020728

(56) Entgegenhaltungen:
- EP-A- 0 453 059
- US-A- 5 345 756

## Beschreibung

Die Erfindung betrifft eine Gas- und Dampfturbinenanlage mit einem der Gasturbine rauchgasseitig nachgeschalteten Abhitzedampferzeuger, dessen Heizflächen in den Wasser-Dampf-Kreislauf der Dampfturbine geschaltet sind, und mit einer der Brennkammer der Gasturbine über eine Brennstoffleitung vorgeschalteten Vergasungseinrichtung für Brennstoff.

Eine Gas- und Dampfturbinenanlage mit integrierter Vergasung von fossilem Brennstoff umfaßt üblicherweise eine Vergasungseinrichtung für den Brennstoff, die ausgangsseitig über eine Anzahl von zur Gasreinigung vorgesehenen Komponenten mit der Brennkammer der Gasturbine verbunden ist. Der Gasturbine kann dabei rauchgasseitig ein Abhitzedampferzeuger nachgeschaltet sein, dessen Heizflächen in den Wasser-Dampf-Kreislauf der Dampfturbine geschaltet sind. Eine derartige Anlage ist beispielsweise aus der GB-A 2 234 984 oder aus der US 4,697,415 bekannt.

Für eine zuverlässige Reinigung des vergasten fossilen Brennstoffs ist bei beiden Anlagen eine Vorrichtung zur Entfernung schwefelhaltiger Bestandteile vorgesehen. Bei der aus der GB-A 2 234 984 bekannten Anlage ist dieser Vorrichtung in einer in die Brennkammer mündenden Zuführungsleitung für den vergasten Brennstoff ein Sättiger zur Inertisierung des Brenngases nachgeschaltet, in dem der vergaste Brennstoff zur Reduktion des Schadstoffausstoßes mit Wasserdampf beladen wird. Dazu durchströmt der vergaste Brennstoff den Sättiger im Gegenstrom zu einem Wasserstrom, der in einem als Sättigerkreislauf bezeichneten Wasserkreislauf geführt ist. Für einen unabhängigen Betrieb des Sättigers von der Gaserzeugungs- oder Gasreinigungsanlage ist dabei eine Einkopplung von Wärme aus dem Wasser-Dampf-Kreislauf in den Sättigerkreislauf vorgesehen.

Diese Anlage ist für einen Betrieb mit vergaster Kohle oder vergasten Raffinerierückständen - z. B. Rückstandsöl - als fossilem Brennstoff vorgesehen und dementsprechend auch hinsichtlich einer Erzielung eines besonders hohen Wirkungsgrades an die Prozeßeigenschaften bei der Vergasung von Kohle bzw. von Rückstandsöl angepaßt. Dabei ist die Anlage insbesondere im Hinblick auf eine kostengünstige und betrieblich zuverlässige Nutzung der bei der Vergasung anfallenden Wärme auf den Wasser-Dampf-Kreislauf der Dampfturbine ausgelegt.

Der Erfindung liegt die Aufgabe zugrunde, eine Gas- und Dampfturbinenanlage der oben genannten Art anzugeben, bei der bei besonders einfacher Bauweise sowohl ein hoher Anlagenwirkungsgrad als auch ein unabhängiger und einfach regelbarer Betrieb der Vorrichtung zur Intertisierung des Brenngases gewährleistet sind, auch bei der Verwendung von Öl als fossilem Brennstoff.

Diese Aufgabe wird erfindungsgemäß gelöst, indem in die Brennstoffleitung in Strömungsrichtung des vergasten Brennstoffs gesehen vor einer Mischvorrichtung zur Zumischung von Stickstoff zum vergasten Brennstoff primärseitig ein Wärmetauscher geschaltet ist, der sekundärseitig als Verdampfer für ein Strömungsmedium ausgebildet und dampfseitig mit der Brennkammer der Gasturbine verbunden ist.

Die Erfindung geht dabei von der Überlegung aus, daß für einen hohen Anlagenwirkungsgrad auch bei der Verwendung von Öl als fossilem Brennstoff eine besonders wirkungsvolle Ausnutzung der im von der Vergasungseinrichtung abströmenden, auch als Rohgas bezeichneten Brennstoffstrom geführten Wärme vorgesehen sein sollte. Gerade bei der Verwendung von Öl als fossilem Brennstoff sollte dabei berücksichtigt sein, daß ein Großteil der Rohgaswärme in der Form latenter Wärme infolge partieller Wasserkondensation bei vergleichsweise niedriger Temperatur anfallen kann. Gerade diese Wärme ist dem Rohgasstrom auf besonders günstige Weise durch Verdampfung eines Strömungsmediums entziehbar, wobei das Strömungsmedium auf besonders einfache und flexible Weise an geeigneter Stelle in den Anlagenprozeß einspeisbar ist. Zusätzlich und für einen vom Wasser-Dampf-Kreislauf der der Gasturbine nachgeschalteten Dampfturbine unabhängigen Betrieb des Inertisierungssystems für das Brenngas ist der erzeugte Dampf bei geeigneter Wahl des Druckniveaus direkt als Inertisierungsmedium dem Brenngas oder dem GT-Brenner zuspeisbar. Über den Wärmetauscher sind dabei für die folgende Vermischung des Rohgases mit Stickstoff, die zur Einhaltung besonders niedriger NOx-Grenzwerte vorgesehen ist, besonders günstige Betriebsparameter, insbesondere ein besonders günstiges Temperaturniveau, des Rohgases einstellbar.

Durch die Zuführung des im Wärmetauscher erzeugten Dampfes in den Brennstoffstrom ist eine zur Einhaltung auch niedriger Schadstoffemissions-Grenzwerte ausreichende Beladung des vergasten Brennstoffs mit Wasserdampf in vollem Umfang gewährleistbar, so daß üblicherweise vorgesehene, aufwendige Einrichtungen zur Beladung des vergasten Brennstoffs mit Wasserdampf vollständig entfallen können. Insbesondere kann die derartig ausgebildete Gas- und Dampfturbinenanlage unter Verzicht auf den üblicherweise vorgesehenen Sättiger mit den ihm zugeordneten weiteren Komponenten ausgeführt sein, so daß sich eine besonders einfache Auslegung ergibt. Weiterhin gewährleistet die Einspeisung des verdampften Strömungsmediums in die Brennkammer der Gasturbine eine besonders wirkungsvolle Ausnutzung der dem Rohgas bei der Verdampfung des Strömungsmediums entzogenen Wärme für den Anlagenprozeß. Ebenso erlaubt die Vorrichtung eine einfache und betrieblich zuverlässige Regelung des Wasserdampfgehalts des Brenngases zur Einhaltung der vorgegebenen Grenzwerte der No_{X}-Emission.

Zweckmäßigerweise ist der Wärmetauscher dabei als Mitteldruckverdampfer für Wasser als Strömungsmedium ausgebildet. Der Wärmetauscher ist dabei vorzugsweise zur Verdampfung des Wassers auf einer Druckstufe von etwa 20 bis 25 bar ausgelegt. Auf diese Weise erzeugter, nicht zur Einspeisung in die Brennkammer benötigter Mitteldruckdampf ist dabei auf besonders günstige Weise auch für den Anlagenprozeß nutzbar und kann beispielsweise in den Wasser-Dampf-Kreislauf der Dampfturbine eingespeist sein.

Der Wärmetauscher ist dabei zweckmäßigerweise zudem dampfseitig über eine Zweigleitung, in die ein Absperrorgan und eine Drosselvorrichtung geschaltet sind, an eine Niederdruckstufe des Wasser-Dampf-Kreislaufs der Dampfturbine angeschlossen. Die Gas- und Dampfturbinenanlage kann dabei derart ausgelegt sein, daß die Produktion einer zur Einhaltung vorgegebener Schadstoffemissions-Grenzwerte ausreichenden, dem Brennstoff zuzuführenden Dampfmenge in jedem Betriebszustand sichergestellt ist. Möglicherweise überschüssiger, im Wärmetauscher erzeugter Dampf ist dabei nach Androsselung zur Erzielung eines besonders hohen Anlagenwirkungsgrades in der Niederdruckstufe des Wasser-Dampf-Kreislaufs direkt zur Energieerzeugung nutzbar. Umgekehrt kann bei besonders strengen Anforderungen an die NO_{X}-Emission auch zusätzlicher Mitteldruckdampf aus dem Wasser-Dampf-Kreislauf, bevorzugt stromauf des Zwischenüberhitzers des Abhitzekessels, zugemischt werden.

In weiterer vorteilhafter Ausgestaltung ist dem Wärmetauscher zur Mitteldruck-Dampferzeugung ein weiterer Wärmetauscher zur Niederdruck-Dampferzeugung nachgeschaltet, um den größten Anteil der Rohgaswärme bei niedriger Temperatur mit hohem Wirkungsgrad nutzen zu können, wobei der erzeugte Dampf zusammen mit dem abgedrosselten Mitteldruckdampf dem Niederdruck-Teil des Wasser-Dampf-Kreislaufs zuleitbar ist. Abhängig von den Erfordernissen der Gasreinigung, insbesondere dem Temperaturniveau einer möglicherweise nachgeschalteten COS-Hydrolyse, kann ein weiterer Wärmetauscher zur Rohgaskühlung vorgesehen sein.

Für einen besonders hohen Anlagenwirkungsgrad ist in weiterer vorteilhafter Ausgestaltung dem Mitteldruck-Verdampfer in der Brennstoffleitung vor dem Wärmetauscher ein Rohgas-Abhitzedampferzeuger vorgeschaltet. Durch den Rohgas-Abhitzedampferzeuger ist eine bedarfsweise, aus Werkstoffgründen günstige Vorkühlung des in der Vergasungseinrichtung erzeugten Rohgases oder Synthesegases möglich.

Die mit der Erfindung erzielten Vorteile bestehen einerseits insbesondere darin, daß auch bei Verwendung von Öl als fossilem Brennstoff ein besonders hoher Gesamtwirkungsgrad der Anlage erreichbar ist. Durch die Nutzung der im Rohgas geführten Wärme, die insbesondere in Form latenter Wärme auf einem vergleichsweise niedrigen Temperaturniveau vorliegen kann, zur Verdampfung des Strömungsmediums ist eine besonders wirkungsvolle und flexible Zuführung dieser Wärme in den Anlagenprozeß ermöglicht. Insbesondere bei der Verdampfung von Wasser als Strömungsmedium und der anschließenden Zuführung dieses Dampfes in das Mischgas ist eine ausreichende Beladung des Mischgases mit Wasserdampf auch ohne die Einschaltung eines Sättigers ermöglicht, der an sich zusammen mit den ihm zugeordneten weiteren Komponenten einen bedeutenden Herstellungs- und Montageaufwand verursachen würde. Andererseits ermöglicht die Beimischung des Dampfes die Einstellung des Sättigungsgrades des Brenngases über einen großen Parameterbereich und ein einfaches und schnell reagierendes Regelungskonzept des Wasserdampfgehalts. Somit ist die Einhaltung auch geringer Grenzwerte für die Schadstoffemission mit besonders geringem Aufwand gewährleistet.

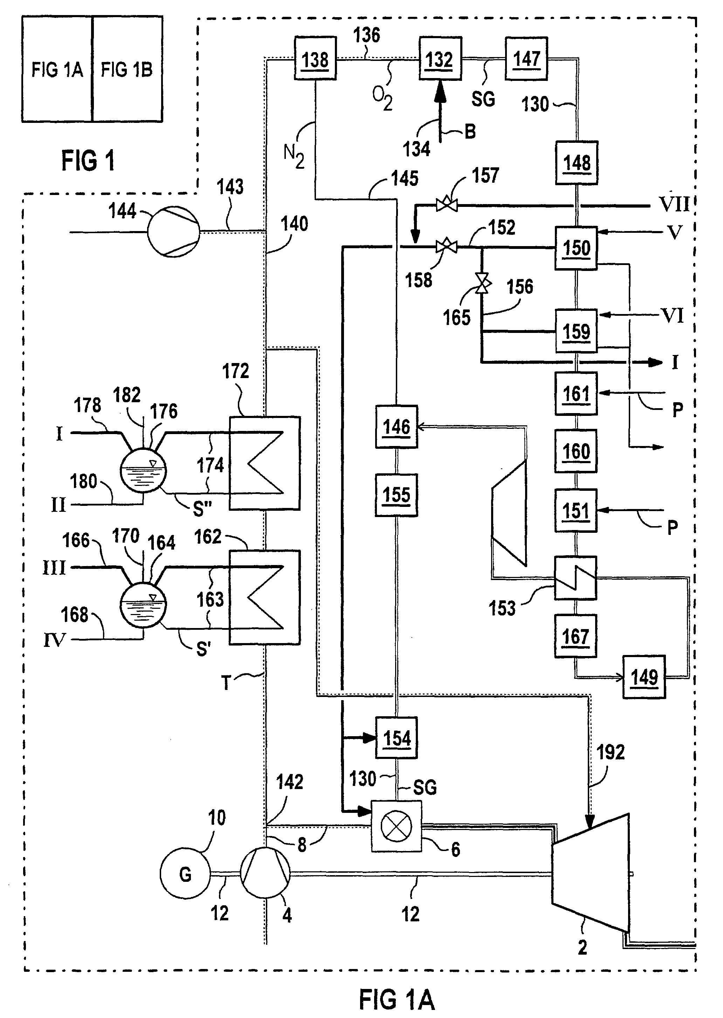

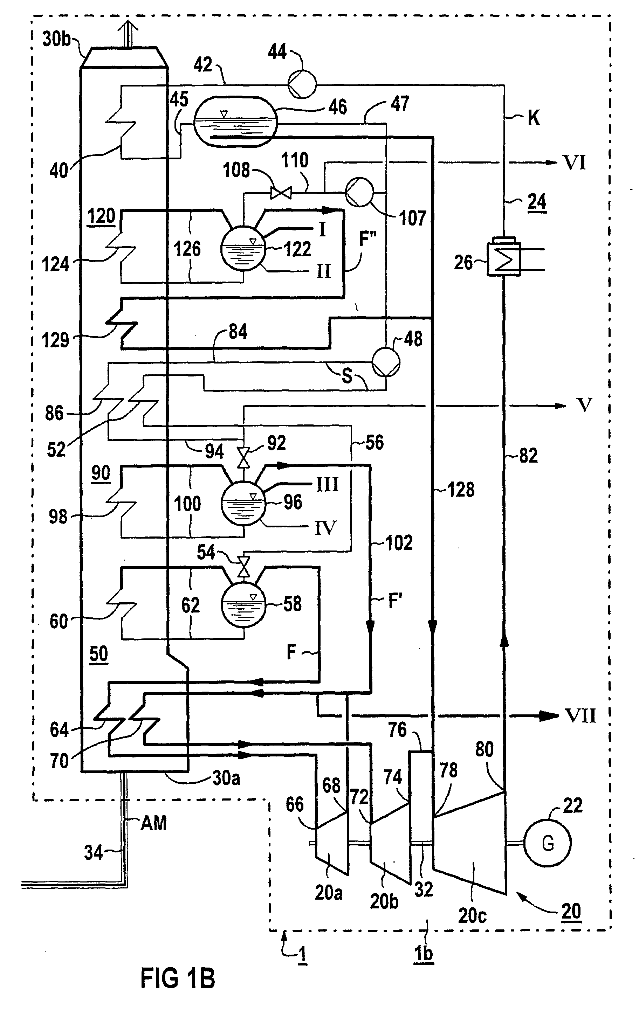

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 1 gemäß der Figur umfaßt eine Gasturbinenanlage 1a und eine Dampfturbinenanlage 1b. Die Gasturbinenanlage 1a umfaßt eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Gasturbine 2 und der Luftverdichter 4 sowie ein Generator 10 sitzen auf einer gemeinsamen Welle 12.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verläßt den Abhitzedampferzeuger 30 über dessen Ausgang 30b in Richtung auf einen nicht näher dargestellten Kamin.

Der Abhitzedampferzeuger 30 umfaßt einen Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kann zudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine Hochdruckspeisepumpe 48 mit Mitteldruckentnahme angeschlossen.

Die Hochdruckspeisepumpe 48 bringt das aus dem Speisewasserbehälter 46 abströmende Speisewasser S auf ein für eine dem Hochdruckteil der Dampfturbine 20 zugeordnete Hochdruckstufe 50 des Wasser-Dampf-Kreislaufs 24 geeignetes Druckniveau. Das unter hohem Druck stehende Speisewasser S ist der Hochdruckstufe 50 über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlaß 66 des Hochdruckteils 20a der Dampfturbine 20 verbunden ist.

Der Dampfauslaß 68 des Hochdruckteils 20a der Dampfturbine 20 ist über einen Zwischenüberhitzer 70 an den Dampfeinlaß 72 des Mitteldruckteils 20b der Dampfturbine 20 angeschlossen. Dessen Dampfauslaß 74 ist über eine Überströmleitung 76 mit dem Dampfeinlaß 78 des Niederdruckteil 20c der Dampfturbine 20 verbunden. Der Dampfauslaß 80 des Niederdruckteils 20c der Dampfturbine 20 ist über eine Dampfleitung 82 an den Kondensator 26 angeschlossen, so daß ein geschlossener Wasser-Dampf-Kreislauf 24 entsteht.

Von der Hochdruckspeisepumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economizer mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlaß 72 des Mitteldruckteils 20b der Dampfturbine 20 angeschlossen.

Von der Leitung 47 zweigt eine weitere, mit einer Niederdruckspeisepumpe 107 versehene und mit einem Ventil 108 absperrbare Leitung 110 ab, die an eine dem Niederdruckteil 20c der Dampfturbine 20 zugeordnete Niederdruckstufe 120 des Wasser-Dampf-Kreislaufs 24 angeschlossen ist. Die Niederdruckstufe 120 umfaßt eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F'' ist die Niederdrucktrommel 122 über eine Dampfleitung 128, in die ein Niederdrucküberhitzer 129 geschaltet ist, an die Überströmleitung 76 angeschlossen. Der Wasser-Dampf-Kreislauf 24 der Gas- und Dampfturbinenanlage 1 umfaßt im Ausführungsbeispiel somit drei Druckstufen 50, 90, 120. Alternativ können aber auch weniger, insbesondere zwei, Druckstufen vorgesehen sein.

Die Gasturbinenanlage 1a ist für den Betrieb mit einem vergasten Synthesegas SG, das durch die Vergasung eines fossilen Brennstoffs B erzeugt wird, ausgelegt. Als Synthesegas ist im Ausführungsbeispiel vergastes Öl vorgesehen. Dazu ist die Brennkammer 6 der Gasturbine 2 eingangsseitig über eine Brennstoffleitung 130 an eine Vergasungseinrichtung 132 angeschlossen. Der Vergasungseinrichtung 132 ist über ein Eintragssystem 134 Öl als fossiler Brennstoff B zuführbar.

Zur Bereitstellung des für die Vergasung des fossilen Brennstoffs B benötigten Sauerstoffs O₂ ist der Vergasungseinrichtung 132 über eine Sauerstoffleitung 136 eine Luftzerlegungsanlage 138 vorgeschaltet. Die Luftzerlegungsanlage 138 ist eingangsseitig mit einem Teilstrom T der im Luftverdichter 4 verdichteten Luft beaufschlagbar. Dazu ist die Luftzerlegungsanlage 138 eingangsseitig an eine Entnahmeluftleitung 140 angeschlossen, die an einer Zweigstelle 142 von der Druckluftleitung 8 abzweigt. In die Entnahmeluftleitung 140 mündet zudem eine weitere Luftleitung 143, in die ein zusätzlicher Luftverdichter 144 geschaltet ist. Im Ausführungsbeispiel setzt sich somit der der Luftzerlegungsanlage 138 zuströmende gesamte Luftstrom L zusammen aus dem von der Druckluftleitung 8 abgezweigten Teilstrom T und aus dem vom zusätzlichen Luftverdichter 144 geförderten Luftstrom. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 143 mitsamt dem zusätzlichen Luftverdichter 144 auch entfallen, so daß die Bespeisung der Luftzerlegungsanlage 138 mit Luft vollständig über den der Druckluftleitung 8 entnommenen Teilstrom T erfolgt.

Der in der Luftzerlegungsanlage 138 bei der Zerlegung des Luftstroms L zusätzlich zum Sauerstoff O₂ gewonnene Stickstoff N₂ wird über eine an die Luftzerlegungsanlage 138 angeschlossene Stickstoffleitung 145 einer Mischvorrichtung 146 zugeführt und dort dem Synthesegas SG zugemischt. Die Mischvorrichtung 146 ist dabei für eine besonders gleichförmige und strähnenfreie Vermischung des Stickstoffs N₂ mit dem Synthesegas SG ausgebildet.

Das von der Vergasungseinrichtung 132 abströmende Synthesegas SG gelangt über die Brennstoffleitung 130 zunächst in einen Rohgas-Abhitzedampferzeuger 147, in dem durch Wärmetausch mit einem Strömungsmedium eine Abkühlung des Synthesegases SG erfolgt. Bei diesem Wärmetausch erzeugter Hochdruckdampf wird in nicht näher dargestellter Weise der Hochdruckstufe 50 des Wasser-Dampf-Kreislaufs 24 zugeführt.

In Strömungsrichtung des Synthesegases SG gesehen hinter dem Rohgas-Abhitzedampferzeuger 147 und vor der Mischvorrichtung 146 sind in die Brennstoffleitung 130 eine Rußwäschevorrichtung 148 für das Synthesegas SG sowie eine Entschwefelungsanlage 149 geschaltet.

Zwischen der Rußwäschevorrichtung 148 und der Entschwefelungsanlage 149 - und somit in Strömungsrichtung des vergasten Brennstoffs (B) gesehen vor der Mischvorrichtung 146 - ist in die Brennstoffleitung 130 ein Wärmetauscher 150 primärseitig geschaltet. Sekundärseitig ist der Wärmetauscher 150 als Verdampfer für Wasser W als Strömungsmedium ausgebildet. Der Wärmetauscher 150 ist dabei als Mitteldruckverdampfer für das Wasser W und somit zur Erzeugung von Wasserdampf mit einem Druck von etwa 5 bis 7 bar ausgelegt, d.h. ausreichend noch für die Beimischung des Dampfes zum Synthesegas SG vor der Brennkammer 6.

Dampfseitig ist der Wärmetauscher 150 über eine Dampfleitung 152 mit einer weiteren Mischvorrichtung 154 verbunden, die ihrerseits in Strömungsrichtung des Synthesegases SG gesehen nach der Mischvorrichtung 146 in die Brennstoffleitung 130 geschaltet ist. Der Wärmetauscher 150 ist somit über die Dampfleitung 152 und über die weitere Mischvorrichtung 154 dampfseitig an die Brennkammer 6 der Gasturbine 2 angeschlossen. Der im Wärmetauscher 150 erzeugte Mitteldruckdampf ist somit dem der Brennkammer 6 zuströmenden Synthesegas SG zuführbar, wobei eine Beladung des Synthesegases SG mit Wasserdampf erfolgt. Dadurch ist ein besonders geringer Schadstoffausstoß bei der Verbrennung des Synthesegases SG gewährleistet. Zwischen die Mischvorrichtung 146 und die weitere Mischvorrichtung 154 ist dabei ein Wärmetauscher 155 in die Brennstoffleitung 130 geschaltet.

Weiterhin ist der Wärmetauscher 150 dampfseitig über eine Zweigleitung 156, die von der Dampfleitung 152 abzweigt, an die Niederdruckstufe 120 des Wasser-Dampf-Kreislaufs 24 angeschlossen. In die Zweigleitung 156 ist dabei zur Sicherstellung eines für die Niederdruckstufe 120 geeigneten Druckniveaus im abströmseitigen Teil der Zweigleitung 156 ein Regelventil 165 geschaltet.

Zur weiteren Abkühlung des Rohgases ist ein zweiter Wärmetauscher 159 - in Strömungsrichtung des Synthesegases SG nach dem Wärmetauscher 150 - primärseitig in die Brennstoffleitung 130 geschaltet. Sekundärseitig ist der Wärmetauscher 159 als Verdampfer für Wasser W als Strömungsmedium ausgebildet. Der Wärmetauscher 159 ist dabei als Niederdruckverdampfer für das Wasser W und somit zur Erzeugung von Wasserdampf bei ca. 6 - 7 bar ausgelegt. Dampfseitig ist der Wärmetauscher 159 mit der Zweigleitung 156 verbunden.

Für eine wirkungsvolle Abscheidung von Schwefelverbindungen aus dem Synthesegas SG ist in die Brennstoffleitung 130 zwischen den Wärmetauscher 159 und die Entschwefelungsanlage 149 eine COS-Hydrolyseeinrichtung 160 geschaltet. Dieser ist zur Einstellung einer besonders günstigen Temperatur für die COS-Hydrolyse ein weiterer Wärmetauscher 161 zur weiteren Rohgaskühlung primärseitig vorgeschaltet. Dieser ist sekundärseitig - wie durch den Pfeil P dargestellt - mit Mitteidruck-Speisewasser aus dem Wasser-Dampf-Kreislauf 24 beaufschlagt.

Zur Abkühlung des Rohrgases ist der COS-Hydrolyseeinrichtung 160 ein weiterer Wärmetauscher 151 nachgeschaltet. Der Wärmetauscher 151 ist sekundärseitig mit Mitteldruck-Speisewasser aus dem Wasser-Dampf-Kreislauf 24 beaufschlagt, was durch den Pfeil P dargestellt ist. Zur weiteren Rohgasabkühlung - in Strömungsrichtung des Rohgases betrachtet - sind vor der Entschwefelungsanlage 149 zwei weitere Wärmetauscher 153 und 167 in die Brennstoffleitung 130 geschaltet. In dem Wärmetauscher 153 wird primärseitig das Rohgas abgekühlt und sekundärseitig das entschwefelte Rohgas wieder aufgeheizt. In dem Wärmetauscher 167 erfolgt eine Abkühlung des Rohgases auf eine Temperatur, bei der in besonders günstiger Weise eine Entschwefelung des Rohgases stattfinden kann. Der Wärmetauscher 167 wird dabei sekundärseitig in nicht näher dargestellter Weise mit kaltem Kondensat oder Kühlwasser beaufschlagt.

Für einen besonders geringen Schadstoffausstoß bei der Verbrennung des vergasten Brennstoffs in der Brennkammer 6 kann eine Beladung des vergasten Brennstoffs mit Wasserdampf vor Eintritt in die Brennkammer 6 vorgesehen sein. Dies kann dabei in wärmetechnisch besonders vorteilhafter Weise in einem Sättigersystem erfolgen. Hierzu kann in die Brennstoffleitung 130 zwischen die Mischvorrichtung 146 und den Wärmetauscher 155 ein Sättiger geschaltet werden, in dem der vergaste Brennstoff im Gegenstrom zu einem auch als Sättigerwasser bezeichneten, aufgeheizten Wasserstrom geführt ist. Das Sättigerwasser oder der Wasserstrom zirkuliert dabei in einem an den Sättiger angeschlossenen Sättigerkreislauf, in den üblicherweise eine Umwälzpumpe geschaltet ist. Zum Ausgleich der bei der Sättigung des vergasten Brennstoffs auftretenden Verluste an Sättigerwasser ist dabei an den Sättigerkreislauf eine Einspeiseleitung angeschlossen.

Zur Kühlung des der Luftzerlegungsanlage 138 zuzuführenden, auch als Entnahmeluft bezeichneten Teilstroms T verdichteter Luft ist in die Entnahmeluftleitung 140 primärseitig ein Wärmetauscher 162 geschaltet, der sekundärseitig als Mitteldruckverdampfer für ein Strömungsmedium S' ausgebildet ist. Der Wärmetauscher 162 ist zur Bildung eines Verdampferumlaufs 163 mit einer als Mitteldrucktrommel ausgebildeten Wasser-Dampf-Trommel 164 verbunden. Die Wasser-Dampf-Trommel 164 ist über Leitungen 166, 168 mit der dem Wasser-Dampf-Umlauf 100 zugeordneten Mitteldrucktrommel 96 verbunden. Alternativ kann der Wärmetauscher 162 sekundärseitig aber auch direkt an die Mitteldrucktrommel 96 angeschlossen sein. Im Ausführungsbeispiel ist die Wasser-Dampf-Trommel 164 also mittelbar an die als Mitteldruckverdampfer ausgebildete Heizfläche 98 angeschlossen. Zur Nachspeisung von verdampftem Strömungsmedium S' ist an die Wasser-Dampf-Trommel 164 zudem eine Speisewasserleitung 170 angeschlossen.

In Strömungsrichtung des Teilstroms T verdichteter Luft gesehen nach dem Wärmetauscher 162 ist in die Entnahmeluftleitung 140 ein weiterer Wärmetauscher 172 geschaltet, der sekundärseitig als Niederdruckverdampfer für ein Strömungsmedium S" ausgebildet ist. Der Wärmetauscher 172 ist dabei zur Bildung eines Verdampferumlaufs 174 an eine als Niederdrucktrommel ausgebildete Wasser-Dampf-Trommel 176 angeschlossen. Im Ausführungsbeispiel ist die Wasser-Dampf-Trommel 176 über Leitungen 178, 180 an die dem Wasser-Dampf-Umlauf 126 zugeordnete Niederdrucktrommel 122 angeschlossen und somit mittelbar mit der als Niederdruckverdampfer ausgebildeten Heizfläche 124 verbunden. Alternativ kann die Wasser-Dampf-Trommel 176 aber auch in anderer geeigneter Weise geschaltet sein, wobei der Wasser-Dampf-Trommel 176 entnommener Dampf einem Nebenverbraucher als Prozeßdampf und/oder als Heizdampf zuführbar ist. In weiterer alternativer Ausgestaltung kann der Wärmetauscher 172 sekundärseitig auch direkt an die Niederdrucktrommel 122 angeschlossen sein. Die Wasser-Dampf-Trommel 176 ist zudem an eine Speisewasserleitung 182 angeschlossen.

Die Verdampferumläufe 163, 174 können jeweils als Zwangumlauf ausgebildet sein, wobei der Umlauf des Strömungsmedium S' bzw. S'' durch eine Umwälzpumpe gewährleistet ist, und wobei das Strömungsmedium S', S'' im als Verdampfer ausgebildeten Wärmetauscher 162 bzw. 172 mindestens teilweise verdampft. Im Ausführungsbeispiel sind jedoch sowohl der Verdampferumlauf 163 als auch der Verdampferumlauf 174 jeweils als Naturumlauf ausgebildet, wobei der Umlauf des Strömungsmediums S' bzw. S'' durch die sich beim Verdampfungsprozeß einstellenden Druckdifferenzen und/oder durch die geodätische Anordnung des jeweiligen Wärmetauschers 162 bzw. 172 und der jeweiligen Wasser-Dampf-Trommel 164 bzw. 176 gewährleistet ist. Bei dieser Ausgestaltung ist in den Verdampferumlauf 163 bzw. in den Verdampferumlauf 174 jeweils lediglich eine (nicht dargestellte) vergleichsweise gering dimensionierte Umwälzpumpe zum Anfahren des Systems geschaltet.

In Strömungsrichtung des Teilstroms T gesehen nach dem Wärmetauscher 172 zweigt von der Entnahmeluftleitung 140 eine Kühlluftleitung 192 ab, über die der Gasturbine 2 eine Teilmenge T' des gekühlten Teilstroms T als Kühlluft zur Schaufelkühlung zuführbar ist.

Die Gas- und Dampfturbinenanlage 1 weist auch bei Verwendung von Öl als fossilem Brennstoff B einen besonders hohen Gesamtwirkungsgrad auf. Durch die Nutzung der im Rohgas geführten Wärme, die insbesondere in Form latenter Wärme auf einem vergleichsweise niedrigen Temperaturniveau vorliegen kann, zur Verdampfung des Wassers W ist eine besonders wirkungsvolle und flexible Zuführung dieser Wärme in den Anlagenprozeß ermöglicht. Insbesondere auch durch die Zuführung des dabei erzeugten Dampfes in aus der Mischvorrichtung 146 abströmende Synthesegas SG ist eine ausreichende Beladung des Mischgases mit Wasserdampf auch ohne die Einschaltung eines Sättigers ermöglicht, der an sich zusammen mit den ihm zugeordneten weiteren Komponenten einen bedeutenden Herstellungsund Montageaufwand verursachen würde. Somit ist die Einhaltung auch geringer Grenzwerte für die Schadstoffemission mit besonders geringem Aufwand gewährleistet.

## Patentansprüche

1. Gas- und Dampfturbinenanlage (1) mit einem einer Gasturbine (2) rauchgasseitig nachgeschalteten Abhitzedampferzeuger (30), dessen Heizflächen in den Wasser-Dampf-Kreislauf (24) einer Dampfturbine (20) geschaltet sind, und mit einer der Brennkammer (6) der Gasturbine (2) über eine Brennstoffleitung (130) vorgeschalteten Vergasungseinrichtung (132) für Brennstoff (B), wobei in die Brennstoffleitung (130) in Strömungsrichtung des vergasten Brennstoffs (B) gesehen vor einer Mischvorrichtung (146) zur Zumischung von Stickstoff (N₂) zum vergasten Brennstoff (B) primärseitig ein Wärmetauscher (150) geschaltet ist, der
sekundärseitig als Verdampfer für ein Strömungsmedium ausgebildet ist, **dadurch gekennzeichnet, daß** dieser dampfseitig mit der Brennkammer (6) der Gasturbine (2) verbunden ist.

2. Gas- und Dampfturbinenanlage (1) nach Anspruch 1, bei der der Wärmetauscher (150) sekundärseitig als Mitteldruckverdampfer für Wasser (W) ausgebildet ist.

3. Gas- und Dampfturbinenanlage (1) nach Anspruch 1 oder 2, bei der der Wärmetauscher (150) dampfseitig über eine Zweigleitung (156), in die ein Regelventil (165) geschaltet ist, an eine Niederdruckstufe (120) des Wasser-Dampf-Kreislaufs (24) angeschlossen ist.

4. Gas- und Dampfturbinenanlage (1) nach einem der Ansprüche 1 bis 3, bei der in die Brennstoffleitung (130) vor dem Wärmetauscher (150) ein Rohgas-Abhitzedampferzeuger (147) geschaltet ist.

## Claims

1. Gas and steam turbine plant (1), with a waste-heat steam generator (30) which is located downstream of a gas turbine (2) on the flue-gas side and the heating surfaces of which are connected into the water/steam circuit (24) of a steam turbine (20), and with a gasification device (132) for fuel (B), located upstream of the combustion chamber (6) of the gas turbine (2) via a fuel line (130), a heat exchanger (150) being connected on the primary side into the fuel line (130), as seen in the direction of flow of the gasified fuel (B), upstream of a mixing apparatus (146) for admixing nitrogen (N₂) to the gasified fuel (B), the said heat exchanger being designed on the secondary side as an evaporator for a flow medium, **characterized in that** the heat exchanger is connected on the steam side to the combustion chamber (6) of the gas turbine (2).

2. Gas and steam turbine plant (1) according to Claim 1, in which the heat exchanger (150) is designed on the secondary side as a medium-pressure evaporator for water (W).

3. Gas and steam turbine plant (1) according to Claim 1 or 2, in which the heat exchanger (150) is connected on the steam side to a low-pressure stage (120) of the water/steam circuit (24) via a branch line (156), into which a regulating valve (165) is connected.

4. Gas and steam turbine plant (1) according to one of Claims 1 to 4, in which a crude-gas waste-heat steam generator (147) is connected into the fuel line (130) upstream of the heat exchanger (150).

## Revendications

1. Installation (1) de turbine à gaz et de turbine à vapeur comprenant un générateur (30) de vapeur à récupération de la chaleur perdue, qui est monté en aval du côté des gaz de fumée d'une turbine (2) à gaz et dont les surfaces de chauffe sont montées dans le circuit (24) eau-vapeur d'une turbine (20) à vapeur, et un dispositif (132) de gazéification de combustible (B) monté en amont de la chambre (6) de combustion de la turbine (2) à gaz par un conduit (130) pour du combustible, un échangeur de chaleur (150) étant monté du côté primaire, considéré dans le sens d'écoulement du combustible (B) gazéifié, en amont d'un dispositif (146) de mélange d'azote (N₂) au combustible (B) gazéifié et étant constitué du côté secondaire en évaporateur pour un fluide en écoulement,
**caractérisée en ce que** l'échangeur de chaleur (150) communique du côté de la vapeur avec la chambre (6) de combustion de la turbine (2) à gaz.

2. Installation (1) de turbine à gaz et de turbine à vapeur suivant la revendication 1, dans laquelle l'échangeur de chaleur (150) est constitué du secondaire en évaporateur moyenne pression pour de l'eau (W).

3. Installation (1) de turbine à gaz et de turbine à vapeur suivant la revendication 1 ou 2, dans laquelle l'échangeur de chaleur (150) est raccordé du côté de la vapeur par un conduit (156) de dérivation dans lequel est montée une vanne (165) de réglage à un étage (120) basse pression du circuit (24) eau-vapeur.

4. Installation (1) de turbine à gaz et de turbine à vapeur suivant l'une des revendications 1 à 3, dans laquelle il est monté dans le conduit (130) pour du combustible, en amont de l'échangeur de chaleur (150), un générateur (147) de vapeur à récupération de la chaleur perdue pour du gaz brut.
